# EUROPÄISCHE PATENTANMELDUNG

(11) **EP 4 509 870 A1**
(43) Veröffentlichungstag der Anmeldung: **19.02.2025**
(21) Anmeldenummer: 24185302.7
(22) Anmeldetag: 28.06.2024
(51) Int. Cl.: G01S 7/481, G01S 17/04, G01V 8/12

(54) **OPTOELEKTRONISCHER SENSOR UND VERFAHREN ZUR HERSTELLUNG EINES OPTOELEKTRONISCHEN SENSORS**

(30) Priorität: 11.08.2023 DE 102023121562
(71) Anmelder: SICK AG, 79183 Waldkirch (DE)
(72) Erfinder: Wülker, Fabian Tobias, 77793 Gutach (DE); Kienzler, Bernd, 79104 Freiburg (DE); Faber, Helge, 79395 Neuenburg (DE)

(57) **Zusammenfassung**

Verfahren zur Herstellung eines optoelektronischen Sensors (1) und optoelektronischer Sensor (1) mit einem Gehäuse (2), mit einer Frontscheibe (3), mit mindestens einem Lichtsender (4), mindestens einem zum Lichtsender (4) in einem festen Abstand angeordneten Lichtempfänger (5), einem optischen Tubus (6), der eine optische Trennung zwischen Lichtsender (4) und Lichtempfänger (5) bewirkt und einer Steuer- und Auswerteeinheit (7) zur Ansteuerung des Lichtsenders (4) und zur Auswertung des Lichtempfängers (5), wobei zwischen dem optischen Tubus (6) und der Frontscheibe (3) ein vorgespanntes flexibles optisches Trennelement (8) angeordnet ist, welches eine optische Trennung zwischen Lichtsendepfad und Lichtempfangspfad bewirkt.

## Beschreibung

Die vorliegende Erfindung betrifft einen optoelektronischen Sensor gemäß dem Oberbegriff von Anspruch 1 und ein Verfahren zur Herstellung eines optoelektronischen Sensors gemäß dem Oberbegriff von Anspruch 9.

Optoelektronische Sensoren werden für eine Vielzahl von Überwachungsaufgaben eingesetzt. Beispiele solcher Sensoren sind Lichttaster oder Reflexionslichtschranken, bei denen ein Lichtsender einen Lichtstrahl aussendet, der reflektiert und von einem neben dem Lichtsender angeordneten Lichtempfänger aufgefangen wird. Ein anderer Sensortyp ist ein Lichtgitter, bei dem eine Reihe von Lichtsender-/Lichtempfängerpaaren nebeneinander angeordnet sind und eine Art Lichtvorhang bilden.

Eine weitere Anwendung der genannten Sensoren ist die optische Bestimmung einer Entfernung nach dem Prinzip des Lichtlaufzeitverfahrens. Ein dem Lichtstrahl aufgeprägtes Sendemuster wird von einem Objekt reflektiert und nach Empfang in dem Sensor mit einem intern erzeugten Referenzmuster verglichen. Daraus lässt sich der Lichtweg und damit auch der Abstand errechnen. In der Praxis werden im Wesentlichen zwei Verfahren angewandt. Bei dem einen Verfahren ist das Sendemuster ein einfacher Lichtpuls, dessen Laufzeit gemessen wird. Bei dem anderen Verfahren ist das Sendemuster eine Sinusmodulation, wobei die Phasenlage des Sinus gegenüber einem Referenzsinus modulo der Periode des Sinus der Laufzeit entspricht.

Die Entfernungsmessung kann beispielsweise in der Fahrzeugsicherheit, der Logistik- oder Fabrikautomatisierung oder der Sicherheitstechnik benötigt werden. Insbesondere kann ein Entfernungsmesser, der auf einem reflektierten Lichtstrahl basiert, auf eine Entfernungsänderung des Reflektors oder des reflektierenden oder remittierenden Ziels reagieren. Eine besondere Anwendung ist eine entfernungsmessende Reflexionslichtschranke, bei welcher der Abstand zwischen Lichtsender und Reflektor überwacht wird.

Optisches Übersprechen zwischen einem Sende- und Empfangspfad eines optoelektronischen Sensors führt zu einer Beeinträchtigung der Performance des optoelektronischen Sensors. Daher müssen diese beiden Lichtpfade voneinander getrennt werden. In einigen Fällen ist eine Trennung von der Elektronikkarte, auf der sich Lichtsender und Lichtempfänger befinden, bis zur Frontscheibe notwendig.

Je nach Sensortyp kommen hierzu ein oder mehrere Trennstege zum Einsatz. Dabei ist eine spaltfreie optische Trennung auf Grund von Toleranzen oft nur mit erhöhtem Aufwand möglich. Besonders aufwändig ist die spaltfreie Umsetzung, wenn ein optoelektronisches Modul seitlich ins Gehäuse des Sensors gefügt wird. Prinzipbedingt verbleibt ein Spalt zwischen dem Trennsteg im optoelektronischen Modul und der Frontscheibe. Dieser Spalt kann nicht durch den Trennsteg des optoelektronischen Moduls gefüllt werden, da dieser anderenfalls beim Fügen des optoelektronischen Moduls ins Gehäuse mit dem Gehäuse kollidiert.

Dieser Spalt muss durch zusätzliche Bauteile geschlossen werden, die durch die Frontscheibenöffnung gefügt werden, um in das zuvor gefügte optoelektronische Modul eingreifen zu können. Wodurch die Frontscheibe nach dem optoelektronischen Modul ins Gehäuse gefügt werden muss, was für einen Gesamtablauf der Montage nachteilig sein kann. Alternativ zum Einsatz kommende Kinematiken, die ein Vorschieben des Trennstegs des optoelektronischen Moduls bis zur Frontscheibe ermöglichen, benötigen Bauraum, der bei vielen Sensortypen nicht verfügbar ist. Alternativ werden die Trennstege als Teil des Gehäuses bis zur Frontscheibe fortgeführt, was jedoch bei unterschiedlichen Varianten der optoelektronischen Module eine Gehäusevarianz zur Folge hat.

Um eine verfügbare optische Fläche möglichst groß zu gestalten, muss der Trennsteg so schmal wie möglich ausgeprägt sein. Bei Fortführung der Trennstege als Teil des Gehäuses, sind sehr schmale Trennstege nicht prozesssicher herzustellen. Des Weiteren wird für die lichtdichte Anbindung des Trennstegs im optoelektronischen Modul zudem im Gehäuse ein Labyrinth benötigt, was zu einer zusätzlichen Verbreiterung der Trennstege führt. Liegt der Trennsteg nicht in Fügerichtung, beispielsweise, weil der Trennsteg gebogen oder schräggestellt ist, kann eine Labyrinthdichtung nur eingeschränkt umgesetzt werden, um beim Fügen Kollisionen zu vermeiden. Zu gebogenen und schräggestellten Trennstegen kommt es v.a. bei Sensoren mit hohem Miniaturisierungsgrad, der eine Verschachtelung der optischen Bereiche erfordert.

Die DE 20 2011 102 825 U1 offenbart einen optoelektronischen Sensor. Der im Sendetubus gelagerte Sender sitzt auf der Oberseite der Empfängeranordnung auf, die im vorliegenden Fall keine zentrale Öffnung aufweist. Die Empfängeranordnung ist weiterhin in einem Empfangstubus angeordnet, der die Empfängeranordnung gegen schräge Fremdlichteinstrahlung schützt. Weiterhin sind drei Haltestege vorgesehen, die den Sendetubus mit dem Empfängertubus verbinden und diesen zudem an der Leiterplatte halten. Die elektrische Kontaktierung der Anschlüsse der Empfängeranordnung mit der Leiterplatte erfolgt durch elastische Kontakte. Die Sendeoptik ist in einer Frontscheibe integriert, durch welche die Empfangslichtstrahlen geführt werden. Die Frontscheibe sitzt auf dem Empfangstubus auf.

Eine Aufgabe der Erfindung besteht darin, einen verbesserten optoelektronischen Sensor bereitzustellen, der eine verbesserte optische Trennung von Sende- und Empfangspfad aufweist.

Die Aufgabe wird gemäß Anspruch 1 gelöst durch einen optoelektronischen Sensor mit einem Gehäuse, mit einer Frontscheibe, mit mindestens einem Lichtsender, mindestens einem zum Lichtsender in einem festen Abstand angeordneten Lichtempfänger, einem optischen Tubus, der eine optische Trennung zwischen Lichtsender und Lichtempfänger bewirkt, und einer Steuer- und Auswerteeinheit zur Ansteuerung des Lichtsenders und zur Auswertung des Lichtempfängers, wobei zwischen dem optischem Tubus und der Frontscheibe ein vorgespanntes, flexibles und optisch dichtes Trennelement angeordnet ist, welches eine optische Trennung zwischen Lichtsendepfad und Lichtempfangspfad bewirkt.

Die Aufgabe wird weiter gemäß Anspruch 9 gelöst durch ein Verfahren zur Herstellung eines optoelektronischen Sensors mit einem Gehäuse, mit einer Frontscheibe, mit mindestens einem Lichtsender, mindestens einem zum Lichtsender in einem festen Abstand angeordneten Lichtempfänger, einem optischen Tubus, der eine optische Trennung zwischen Lichtsender und Lichtempfänger bewirkt, und einer Steuer- und Auswerteeinheit zur Ansteuerung des Lichtsenders und zur Auswertung des Lichtempfängers, wobei zwischen optischem Tubus und der Frontscheibe ein vorgespanntes, flexibles und optisch dichtes Trennelement angeordnet wird, welches eine optische Trennung zwischen Lichtsendepfad und Lichtempfangspfad bewirkt.

Das optisch dichte Trennelement ist lichtundurchlässig ausgebildet. Insbesondere ist das Trennelement lichtundurchlässig für die verwendeten Lichtstrahlen des Lichtsenders bzw. des Lichtempfängers. Das Trennelement verhindert ein Übersprechen vom Lichtsender zum Lichtempfänger über einen Lichtsendepfad und/oder einen Lichtempfangspfad innerhalb des Gehäuses des optoelektronischen Sensors.

Beispielsweise ist das optische Trennelement an dem optischen Tubus angeordnet. Das Trennelement ragt über den optischen Tubus hinaus in Richtung der Frontscheibe, solange der optische Tubus noch nicht zu der Frontscheibe platziert wurde. In montiertem Zustand des optischen Tubus und der Frontscheibe ist das optische Trennelement zwischen Frontscheibe und optischem Tubus vorgespannt und schließt lichtdicht zwischen Frontscheibe und optischem Tubus ab.

Durch die Vorspannung können Lagetoleranzen zwischen optischem Tubus und Frontscheibe und ein daraus resultierender Spalt überbrückt und damit lichtdicht geschlossen werden. Dieser Effekt wird beispielsweise genutzt bei optischen Tuben, die senkrecht oder parallel zur Frontscheibe gefügt werden und wenn die Frontscheibe beispielsweise nach dem optischen Tubus ins Gehäuse gefügt wird.

Wird der optische Tubus seitlich ins Gehäuse gefügt, d.h. parallel zur Frontscheibe, weicht das flexible bzw. elastische Trennelement beispielsweise einem Gehäusesteg aus, der sich zwischen den Öffnungen für einen Gehäusedeckel und einer Frontscheibe befindet. Nachdem der Gehäusesteg passiert ist, federt das Trennelement bis zur Frontscheibe zurück und schließt lichtdicht mit dieser ab. Um das Ausweichen des Trennelements bei Gehäusekontakt zu begünstigen, kann das Trennelement partiell gebogen sein, es können Einführschrägen am Gehäuse oder an dem Trennelement gebildet sein. Beispielsweise kann das Trennelement manuell oder mit Hilfsmitteln zurückgebogen werden, während dem Fügeprozess des optischen Tubus ins Gehäuse.

Gemäß der Erfindung erfolgt eine Überbrückung von Toleranzen durch den Federweg des vorgespannten elastischen bzw. flexiblen Trennelements.

Beispielsweise kann ein einstückiges Trennelement vorgesehen sein. Unabhängig von der Fügerichtung des optischen Tubus weicht das Trennelement während einem seitlichen Fügen einer Gehäusekante aus. Dadurch sind keine Zusatzbauteile, bauraumintensive Kinematiken und Labyrinthdichtungen nötig.

Durch eine geringe Dicke des Trennelements werden die optischen Flächen geringstmöglich beschnitten. Dabei liegt die maximale Dicke des Trennelements deutlich unter der Dicke spritzgegossener Zusatzbauteile.

Die Geometriegebung bzw. die Herstellung des Trennelements kann in einem Stanz-, LASER-, CNC-schnitt-, oder anderem Trennprozess erfolgen.

Das Trennelement ist beispielsweise an der Frontscheibe angebracht und durch die Flexibilität des Trennelements werden Toleranzen zum optischen Tubus ausgeglichen bzw. erfolgt ein Wegfedern des Trennelements, wenn der optische Tubus gefügt wird.

Beispielsweise ist dem Lichtsender und dem Lichtempfänger jeweils eine Optik bzw. eine Linse zugeordnet.

Beispielsweise sind Lichtsender und Lichtempfänger auf einer gemeinsamen Platine angeordnet. Auf diese Weise haben Lichtsender und Lichtempfänger einen wohldefinierten Abstand zueinander, der eine sehr geringe Toleranz aufweist.

Das Gehäuse des Sensors ist beispielsweise aus Kunststoff, Aluminium, Zinklegierung oder Edelstahl hergestellt. Das Sensorgehäuse kann beispielsweise mehrteilig ausgebildet sein, wobei einzelne Teile des Sensorgehäuses beispielsweise aus Kunststoff, Aluminium, Zinklegierung oder Edelstahl ausgebildet sind.

Die Steuer- und Auswerteeinheit ist beispielsweise durch einen Mikrocontroller, einen digitalen Signalprozessor, einen Mikroprozessor, ein ASIC oder ein FPGA gebildet.

Der optische Tubus ist vorzugsweise aus schwarzem, insbesondere schwarzem Kunststoff mit matter Oberfläche gebildet, wodurch störende Lichtstrahlen absorbiert werden.

In Weiterbildung der Erfindung ist das Trennelement eine Trennfolie. Die Trennfolie ist flexibel bzw. elastisch ausgebildet und lichtdicht. Die Trennfolie ist vorzugsweise aus Kunststoff gebildet. Die Trennfolie kann bandförmig hergestellt werden und dann in gewünschte Größen vereinzelt werden. Die Trennfolie weist beispielsweise eine Dicke von 0,1 bis 1 mm auf.

In Weiterbildung der Erfindung ist das Trennelement ein Trennblech. Das Trennblech ist flexibel bzw. elastisch ausgebildet und lichtdicht. Das Trennblech ist vorzugsweise aus Kupfer, Messing oder einer anderen Legierung gebildet. Jedoch kann das Trennblech auch aus Stahl bzw. Edelstahl ausgebildet sein. Das Trennblech kann bandförmig hergestellt werden und dann in gewünschte Größen vereinzelt werden. Das Trennblech weist beispielsweise eine Dicke von 0,1 bis 0,5 mm auf.

Beispielsweise ist das Trennblech schwarz, insbesondere matt schwarz lackiert, um Lichtstrahlen zu absorbieren.

In Weiterbildung der Erfindung bildet das Trennelement eine gebogene Fläche. Insbesondere im montierten Zustand bildet das Trennelement eine gebogene Fläche. Die gebogene Fläche wird durch die Vorspannung gebildet, wobei mindestens eine Kante des Trennelements gegen die Frontscheibe oder gegen den optischen Tubus gedrückt wird.

In Weiterbildung der Erfindung bildet das Trennelement eine in zwei orthogonalen Richtungen gebogene Fläche. Insbesondere im montierten Zustand bildet das Trennelement eine gebogene Fläche. Die gebogene Fläche wird durch die Vorspannung gebildet, wobei mindestens eine Kante des Trennelements gegen die Frontscheibe oder gegen den optischen Tubus gedrückt wird. Weiter ist das Trennelement orthogonal zur ersten Richtung gebogen, um beispielsweise entlang eines runden optischen Elements angeordnet werden zu können.

In Weiterbildung der Erfindung ist eine optoelektronische Vorbaugruppe bzw. ein optoelektronisches Modul gebildet, wobei die Vorbaugruppe mindestens den Lichtsender, mindestens den Lichtempfänger und mindestens den optischen Tubus aufweist. Beispielsweise weist die optoelektronische Vorbaugruppe jeweils eine Optik bzw. eine Linse für den Lichtsender und den Lichtempfänger auf.

Beispielsweise ist das optische Trennelement an der optoelektronischen Vorbaugruppe angeordnet. Das Trennelement ragt über die optoelektronische Vorbaugruppe hinaus in Richtung der Frontscheibe, solange die optoelektronische Vorbaugruppe noch nicht zu der Frontscheibe platziert wurde. In montiertem Zustand der optoelektronischen Vorbaugruppe und der Frontscheibe ist das optische Trennelement zwischen Frontscheibe und optoelektronischer Vorbaugruppe vorgespannt und schließt lichtdicht zwischen Frontscheibe und optoelektronischer Vorbaugruppe ab.

Durch die Vorspannung können Lagetoleranzen zwischen optoelektronischer Vorbaugruppe und Frontscheibe und ein daraus resultierender Spalt überbrückt und damit lichtdicht geschlossen werden. Dieser Effekt wird beispielsweise genutzt bei einer optoelektronischen Vorbaugruppe, die senkrecht oder parallel zur Frontscheibe gefügt werden kann und wenn die Frontscheibe beispielsweise nach der optoelektronische Vorbaugruppe ins Gehäuse gefügt wird.

Wird die optoelektronische Vorbaugruppe seitlich ins Gehäuse gefügt, d.h. parallel zur Frontscheibe, weicht das flexible bzw. elastische Trennelement beispielsweise einem Gehäusesteg aus, der sich zwischen den Öffnungen für einen Gehäusedeckel und einer Frontscheibe befindet. Nachdem der Gehäusesteg passiert ist, federt das Trennelement bis zur Frontscheibe zurück und schließt lichtdicht mit dieser ab. Um das Ausweichen des Trennelements bei Gehäusekontakt zu begünstigen, kann das Trennelement partiell gebogen sein, es können Einführschrägen am Gehäuse oder an dem Trennelement gebildet sein. Beispielsweise kann das Trennelement manuell oder mit Hilfsmitteln zurückgebogen werden, während dem Fügeprozess der optoelektronischen Vorbaugruppe ins Gehäuse.

In Weiterbildung der Erfindung ist das Trennelement am optischen Tubus vorfixiert und liegt nach der Montage an der Frontscheibe an.

Die Verbindung zwischen optischem Tubus und Trennelement kann beispielsweise durch folgende Verfahren gewährleistet werden: Das Trennelement wird im optischen Tubus mit Folienlaschen verrastet. Das Trennelement wird in einen Schacht des optischen Tubus eingelegt und ein Herausrutschen des Trennelements durch Klebstoff oder Fixierung an einer Folienschulter des Trennelements verhindert.

In Weiterbildung der Erfindung ist das Trennelement an der Frontscheibe vorfixiert und liegt nach der Montage am optischen Tubus an.

Die Verbindung zwischen Frontscheibe und Trennelement kann durch folgende Verfahren gewährleistet werden: Das Trennelement wird mit der Frontscheibe verbunden durch Kleben, Ultraschall- oder Laserschweißen. Außerdem kann das Trennelement als Einlegeteil für spritzgegossene Frontscheiben als Einlegeteil im Spritzgusswerkzeug, oder als zweikomponenten Spritzguss verwendet werden.

Die Erfindung wird nachstehend auch hinsichtlich weiterer Vorteile und Merkmale unter Bezugnahme auf die beigefügte Zeichnung anhand von Ausführungsbeispielen erläutert.

Die Figuren der Zeichnung zeigen in:
- Figur 1 bis 9: jeweils einen optoelektronischen Sensor;
- Figur 10 bis 12: jeweils einen optischen Tubus mit einem Trennelement.

In den nachfolgenden Figuren sind identische Teile mit identischen Bezugszeichen versehen.

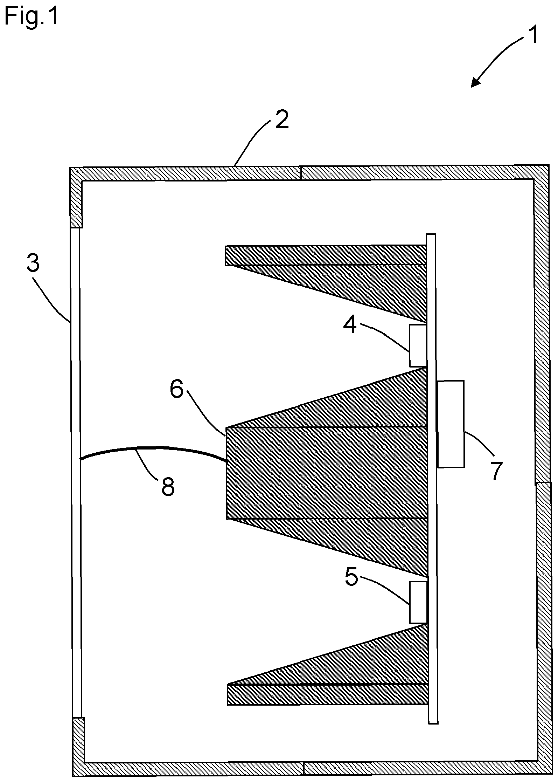

Figur 1 zeigt einen optoelektronischen Sensor 1 mit einem Gehäuse 2, mit einer Frontscheibe 3, mit mindestens einem Lichtsender 4, mindestens einem zum Lichtsender 4 in einem festen Abstand angeordneten Lichtempfänger 5, einem optischen Tubus 6, der eine optische Trennung zwischen Lichtsender 4 und Lichtempfänger 5 bewirkt, und einer Steuer- und Auswerteeinheit 7 zur Ansteuerung des Lichtsenders 4 und zur Auswertung des Lichtempfängers 5, wobei zwischen dem optischen Tubus 6 und der Frontscheibe 3 ein vorgespanntes, flexibles und optisch dichtes Trennelement 8 angeordnet ist, welches eine optische Trennung zwischen Lichtsendepfad und Lichtempfangspfad bewirkt.

Das optisch dichte Trennelement 8 ist lichtundurchlässig ausgebildet. Insbesondere ist das Trennelement 8 lichtundurchlässig für die verwendeten Lichtstrahlen des Lichtsenders 4 bzw. des Lichtempfängers 5. Das Trennelement 8 verhindert ein Übersprechen vom Lichtsender 4 zum Lichtempfänger 5 über einen Lichtsendepfad und/oder einen Lichtempfangspfad innerhalb des Gehäuses 2 des optoelektronischen Sensors 1.

Beispielsweise ist das optische Trennelement 8 an dem optischen Tubus 6 angeordnet. Das Trennelement 8 ragt über den optischen Tubus 6 hinaus in Richtung der Frontscheibe 3, solange der optische Tubus noch nicht zu der Frontscheibe 3 platziert wurde. In montiertem Zustand des optischen Tubus 6 und der Frontscheibe 3 ist das optische Trennelement 8 zwischen Frontscheibe 3 und optischem Tubus 6 vorgespannt und schließt lichtdicht zwischen Frontscheibe 3 und optischem Tubus 6 ab.

Durch die Vorspannung können Lagetoleranzen zwischen optischem Tubus 6 und Frontscheibe 3 und ein daraus resultierender Spalt überbrückt und damit lichtdicht geschlossen werden. Dieser Effekt wird beispielsweise genutzt bei optischen Tuben 6, die senkrecht oder parallel zur Frontscheibe 3 gefügt werden und wenn die Frontscheibe 3 beispielsweise nach dem optischen Tubus 6 ins Gehäuse 1 gefügt wird.

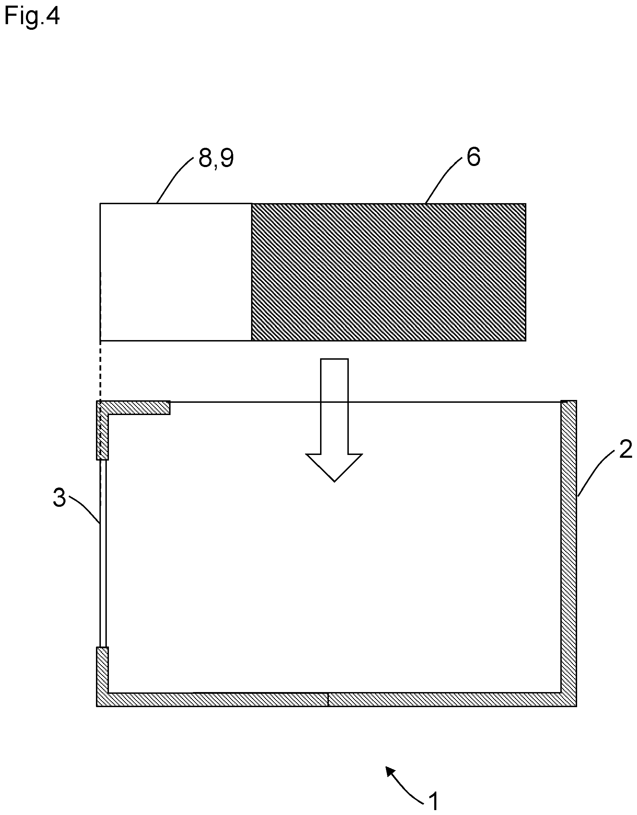

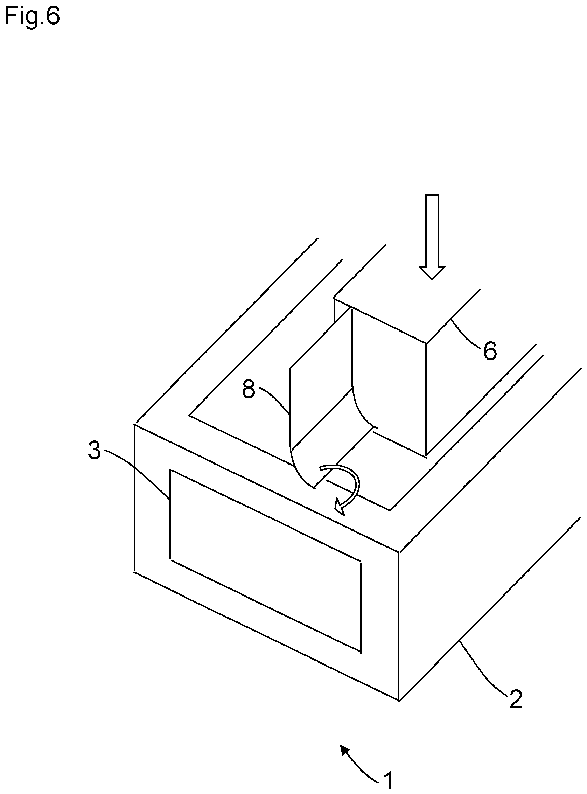

Wird der optische Tubus 6 gemäß Figur 4 seitlich ins Gehäuse 2 gefügt, d.h. parallel zur Frontscheibe 3, weicht das flexible bzw. elastische Trennelement 8 beispielsweise einem Gehäusesteg aus, wie in Figur 6 dargestellt, der sich zwischen den Öffnungen für einen Gehäusedeckel und einer Frontscheibe 3 befindet. Nachdem der Gehäusesteg passiert ist, federt das Trennelement 8 bis zur Frontscheibe 3 zurück und schließt lichtdicht mit dieser ab. Um das Ausweichen des Trennelements 8 bei Gehäusekontakt zu begünstigen, kann das Trennelement 8 partiell gebogen sein, es können Einführschrägen am Gehäuse 2 oder an dem Trennelement 8 gebildet sein. Beispielsweise kann das Trennelement 8 manuell oder mit Hilfsmitteln zurückgebogen werden, während dem Fügeprozess des optischen Tubus 6 ins Gehäuse 2.

Beispielsweise kann ein einstückiges Trennelement 8 vorgesehen sein. Unabhängig von der Fügerichtung des optischen Tubus 6 weicht das Trennelement 8 während einem seitlichen Fügen einer Gehäusekante aus. Dadurch sind keine Zusatzbauteile, bauraumintensive Kinematiken und Labyrinthdichtungen nötig.

Das Trennelement 8 ist beispielsweise an der Frontscheibe 3 angebracht und durch die Flexibilität des Trennelements 8 werden Toleranzen zum optischen Tubus 6 ausgeglichen bzw. erfolgt ein Wegfedern des Trennelements 8, wenn der optische Tubus 6 gefügt wird.

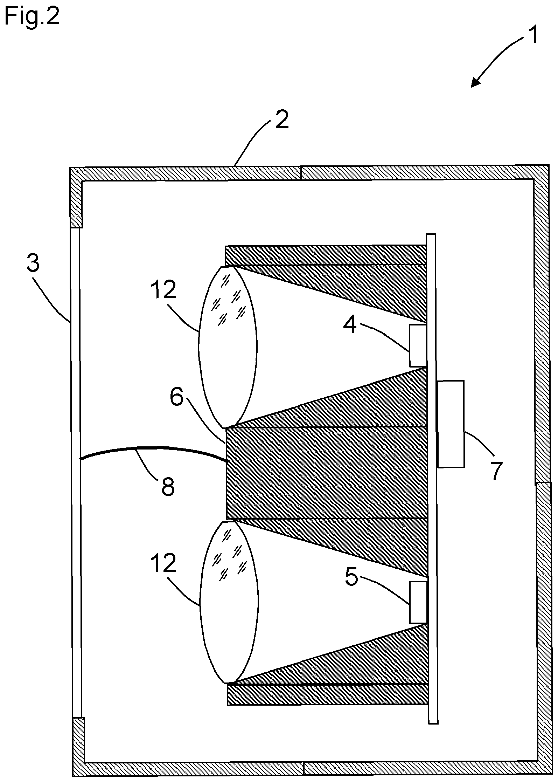

Beispielsweise ist gemäß Figur 2 dem Lichtsender 4 und dem Lichtempfänger 5 jeweils eine Optik bzw. eine Linse 12 zugeordnet. Beispielsweise sind Lichtsender 4 und Lichtempfänger 5 auf einer gemeinsamen Platine angeordnet.

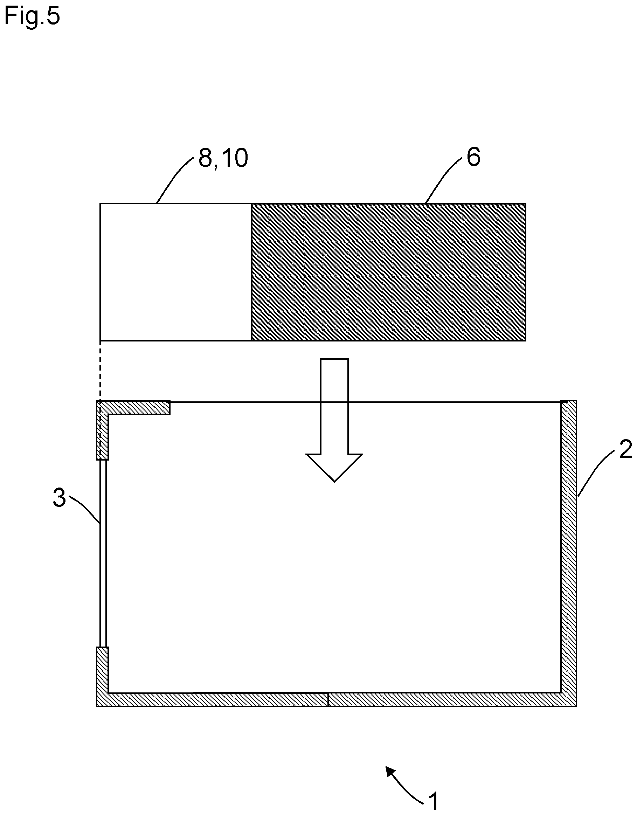

Beispielsweise ist das Trennelement 8 eine Trennfolie 9 gemäß Figur 4. Beispielsweise ist das Trennelement 8 ein Trennblech 10 gemäß Figur 5. Beispielsweise ist das Trennblech 10 schwarz, insbesondere matt schwarz lackiert, um Lichtstrahlen zu absorbieren.

Beispielsweise bildet das Trennelement 8 eine gebogene Fläche. Insbesondere im montierten Zustand bildet das Trennelement 8 eine gebogene Fläche gemäß Figur 1. Die gebogene Fläche wird durch die Vorspannung gebildet, wobei mindestens eine Kante des Trennelements 8 gegen die Frontscheibe oder gegen den optischen Tubus 6 gedrückt wird.

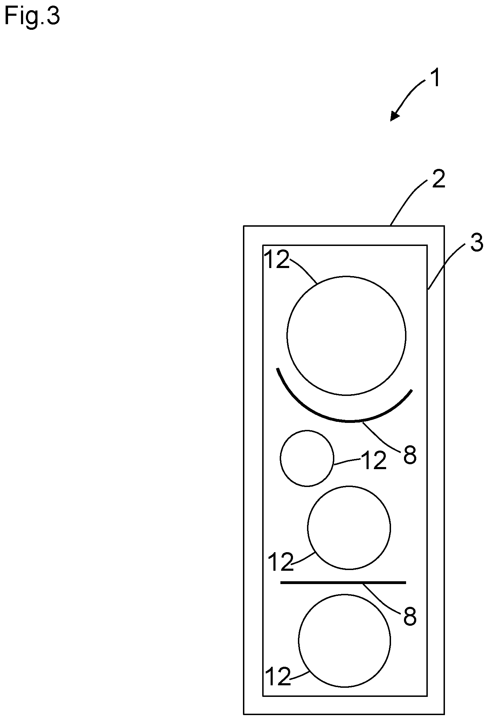

Beispielsweise bildet das Trennelement 8 eine in zwei orthogonalen Richtungen gebogene Fläche gemäß Figur 3. Figur 3 zeigt eine Draufsicht auf die Frontscheibe 3. Verschiedene Linsen 12 sind schematisch eingezeichnet. Insbesondere im montierten Zustand bildet das Trennelement 8 eine gebogene Fläche. Die gebogene Fläche wird durch die Vorspannung gebildet, wobei mindestens eine Kante des Trennelements 8 gegen die Frontscheibe 3 oder gegen den optischen Tubus 6 gedrückt wird. Weiter ist das Trennelement 8 orthogonal zur ersten Richtung gebogen, um beispielsweise entlang eines runden optischen Elements, beispielsweise einer Linse 12, angeordnet werden zu können.

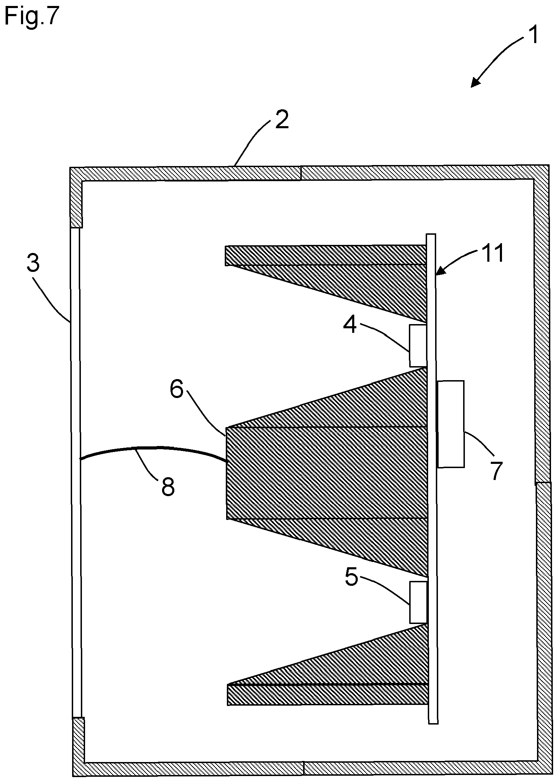

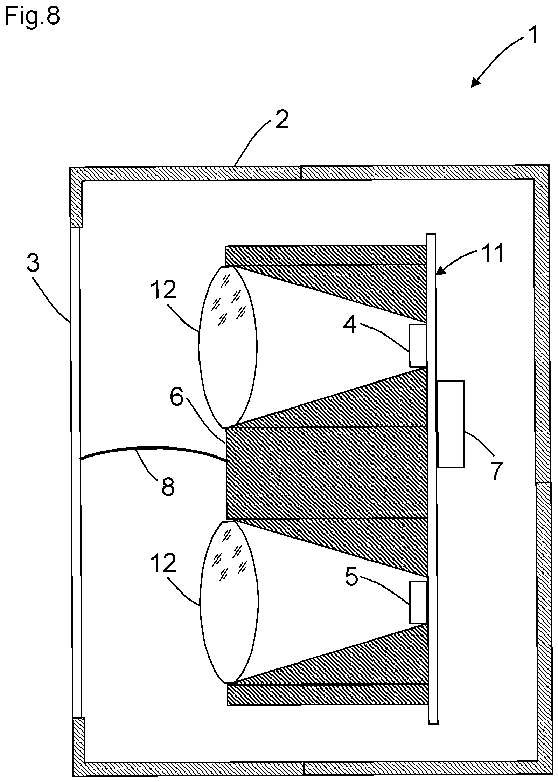

Beispielsweise ist gemäß Figur 7 eine optoelektronische Vorbaugruppe 11 bzw. ein optoelektronisches Modul gebildet, wobei die Vorbaugruppe 11 mindestens den Lichtsender 4, mindestens den Lichtempfänger 5 und mindestens den optischen Tubus 6 aufweist. Beispielsweise weist gemäß Figur 8 die optoelektronische Vorbaugruppe 11 jeweils eine Optik bzw. jeweils eine Linse 12 für den Lichtsender 4 und den Lichtempfänger 5 auf.

Beispielsweise ist das optische Trennelement 8 an der optoelektronischen Vorbaugruppe 11 angeordnet. Das Trennelement 8 ragt über die optoelektronische Vorbaugruppe 11 hinaus in Richtung der Frontscheibe 3, solange die optoelektronische Vorbaugruppe 11 noch nicht zu der Frontscheibe 3 platziert wurde. In montiertem Zustand der optoelektronischen Vorbaugruppe 11 und der Frontscheibe 3 ist das optische Trennelement 8 zwischen Frontscheibe 3 und optoelektronischer Vorbaugruppe 11 vorgespannt und schließt lichtdicht zwischen Frontscheibe 3 und optoelektronischer Vorbaugruppe 11 ab.

Durch die Vorspannung können Lagetoleranzen zwischen optoelektronischer Vorbaugruppe 11 und Frontscheibe 3 und ein daraus resultierender Spalt überbrückt und damit lichtdicht geschlossen werden. Dieser Effekt wird beispielsweise genutzt bei einer optoelektronischen Vorbaugruppe 11, die senkrecht oder parallel zur Frontscheibe 3 gefügt wird und wenn die Frontscheibe 3 beispielsweise nach der optoelektronischen Vorbaugruppe 11 ins Gehäuse gefügt wird.

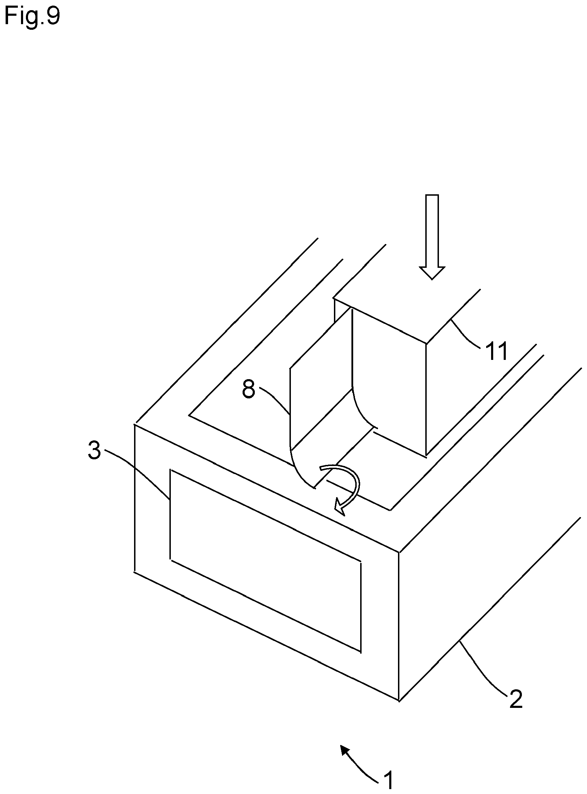

Wird die optoelektronische Vorbaugruppe 11 gemäß Figur 9 seitlich ins Gehäuse 2 gefügt, d.h. parallel zur Frontscheibe 3, weicht das flexible bzw. elastische Trennelement 8 beispielsweise einem Gehäusesteg aus, der sich zwischen den Öffnungen für einen Gehäusedeckel und einer Frontscheibe 3 befindet. Nachdem der Gehäusesteg passiert ist, federt das Trennelement 8 bis zur Frontscheibe 3 zurück und schließt lichtdicht mit dieser ab. Um das Ausweichen des Trennelements 8 bei Gehäusekontakt zu begünstigen, kann das Trennelement 8 partiell gebogen sein, es können Einführschrägen am Gehäuse 2 oder an dem Trennelement 8 gebildet sein. Beispielsweise kann das Trennelement 8 manuell oder mit Hilfsmitteln zurückgebogen werden, während dem Fügeprozess der optoelektronischen Vorbaugruppe 11 ins Gehäuse 2.

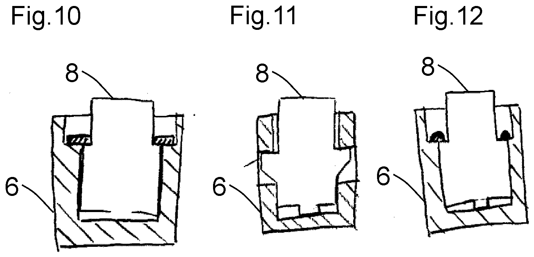

Beispielsweise ist das Trennelement 8 am optischen Tubus 6 vorfixiert und liegt nach der Montage an der Frontscheibe 3 an. Die Verbindung zwischen optischem Tubus 6 und Trennelement 8 kann beispielsweise durch folgende Verfahren gewährleistet werden: Das Trennelement 8 wird im optischen Tubus 6 gemäß Figur 11 mit Folienlaschen verrastet. Das Trennelement 8 wird in einen Schacht des optischen Tubus 6 eingelegt und ein Herausrutschen des Trennelements 8 durch Klebstoff gemäß Figur 12 oder Fixierung gemäß Figur 10 an einer Folienschulter des Trennelements 8 verhindert.

Beispielsweise ist das Trennelement 8 an der Frontscheibe 3 vorfixiert und liegt nach der Montage am optischen Tubus 6 an.

### Bezugszeichen:

1 optoelektronischer Sensor
2 Gehäuse
3 Frontscheibe
4 Lichtsender
5 Lichtempfänger
6 optischer Tubus
7 Steuer- und Auswerteeinheit
8 Trennelement
9 Trennfolie
10 Trennblech
11 Vorbaugruppe
12 Linse

## Patentansprüche

1. Optoelektronischer Sensor (1) mit einem Gehäuse (2), mit einer Frontscheibe (3), mit mindestens einem Lichtsender (4), mindestens einem zum Lichtsender (4) in einem festen Abstand angeordneten Lichtempfänger (5), einem optischen Tubus (6), der eine optische Trennung zwischen Lichtsender (4) und Lichtempfänger (5) bewirkt und einer Steuer- und Auswerteeinheit (7) zur Ansteuerung des Lichtsenders (4) und zur Auswertung des Lichtempfängers (5),
**dadurch gekennzeichnet, dass**
zwischen dem optischen Tubus (6) und der Frontscheibe (3) ein vorgespanntes flexibles optisches Trennelement (8) angeordnet ist, welches eine optische Trennung zwischen Lichtsendepfad und Lichtempfangspfad bewirkt.

2. Optoelektronischer Sensor (1) nach Anspruch 1, **dadurch gekennzeichnet, dass** das Trennelement (8) eine Trennfolie (9) ist.

3. Optoelektronischer Sensor (1) nach Anspruch 1, **dadurch gekennzeichnet, dass** das Trennelement (8) ein Trennblech (10) ist.

4. Optoelektronischer Sensor (1) nach Anspruch 1, **dadurch gekennzeichnet, dass** das Trennelement (8) eine gebogene Fläche bildet.

5. Optoelektronischer Sensor (1) nach Anspruch 1, **dadurch gekennzeichnet, dass** das Trennelement (8) eine in zwei orthogonalen Richtungen gebogene Fläche bildet.

6. Optoelektronischer Sensor (1) nach Anspruch 1, **dadurch gekennzeichnet, dass** eine optoelektronische Vorbaugruppe (11) gebildet ist, wobei die Vorbaugruppe (11) mindestens den Lichtsender (4), mindestens den Lichtempfänger (5) und mindestens den optischen Tubus (6) aufweist.

7. Optoelektronischer Sensor (1) nach einem der vorhergehenden Ansprüche,
**dadurch gekennzeichnet, dass** das Trennelement (8) am optischen Tubus (6) vorfixiert ist und nach der Montage an der Frontscheibe (3) anliegt.

8. Optoelektronischer Sensor (1) nach einem der vorhergehenden Ansprüche, **dadurch gekennzeichnet, dass** das Trennelement (8) an der Frontscheibe (3) vorfixiert ist und nach der Montage am optischen Tubus (6) anliegt.

9. Verfahren zur Herstellung eines optoelektronischen Sensors (1) mit einem Gehäuse (2), mit einer Frontscheibe (3), mit mindestens einem Lichtsender (4), mindestens einem zum Lichtsender (4) in einem festen Abstand angeordneten Lichtempfänger (5), einem optischen Tubus (6), der eine optische Trennung zwischen Lichtsender (4) und Lichtempfänger (5) bewirkt, und einer Steuer- und Auswerteeinheit (7) zur Ansteuerung des Lichtsenders (4) und zur Auswertung des Lichtempfängers (5),
**dadurch gekennzeichnet, dass**
zwischen optischem Tubus (6) und der Frontscheibe (3) ein vorgespanntes flexibles optisches Trennelement (8) angeordnet wird, welches eine optische Trennung zwischen Lichtsendepfad und Lichtempfangspfad bewirkt.
